# EUROPEAN PATENT SPECIFICATION

(11) **EP 0 672 227 B1**
(45) Date of publication and mention of the grant of the patent: **26.03.1997**
(21) Application number: 94900922.9
(22) Date of filing: 24.11.1993
(51) Int. Cl.: F16L 33/01

(54) **HOSE END FITTING AND HOSE ASSEMBLY**
SCHLAUCHENDANSCHLUSS UND SCHLAUCHAUFBAU
EMBOUT TERMINAL POUR TUYAU ET ENSEMBLE TUYAU

(30) Priority: 24.11.1992 GB 9224552
(43) Date of publication of application: 20.09.1995
(73) Proprietor: DUNLOP LIMITED, London SW1P 2PL (GB)
(72) Inventor: Richards, Stephen John, Grimsby, South Humberside DN37 0UR (GB); Zandiyeh, Ali Reza Kambiez, Grimsby, DN33 3EG (GB)
(74) Representative: Badger, John Raymond
(86) International application number: GB9302417
(87) International publication number: WO9412824

(56) References cited:
- DE-B- 1 180 584
- US-A- 2 854 030
- US-A- 3 119 415

## Description

This invention provides a hose end fitting and a hose assembly comprising said end fitting in combination with a flexible reinforced hose. The invention relates in particular, although not exclusively, to a hose end fitting and a hose assembly of a large bore type having a bore of at least 4 inches (100 mm), the assembly being constructed typically by building the hose in situ around the end fitting.

Large bore hoses are employed commonly for transporting high volumes of oil such as, for example, when loading and unloading an oil tanker, especially offshore. The hoses may incorporate buoyancy so that they are able inherently to float.

In use the hose assemblies are exposed to arduous conditions and are subject to high loads especially at their end regions, resulting in a potential risk of failure. Sometimes it is possible to reduce the risk of failure by providing additional material but that leads to added costs. Also in the case of offshore floating type hoses the weight of any additional material will necessitate additional buoyancy.

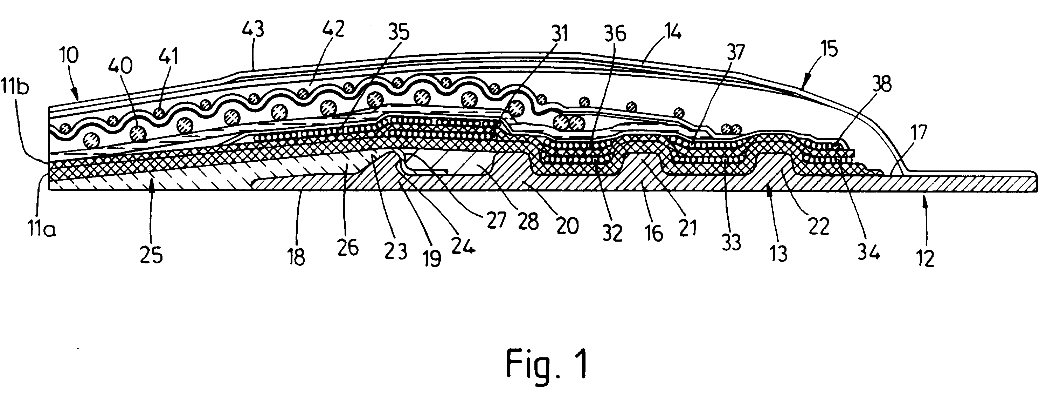

A conventional hose and end fitting assembly is shown in part, in longitudinal cross-section, in Figure 1. The hose 10 is of a large bore (24 inch bore) and has a single, multi-layer type reinforcing carcass 11.

The end fitting 12 has an end location flange (not shown) integral with one end of a beaded insert 13 around which the end region 14 of hose 15 is built.

The insert 13 comprises a tubular body 16 of circular cross-section and an outer surface 17 tapered at a first, inner tail end 18 but otherwise cylindrical apart from the presence of four uniformly spaced retention beads 19-22.

The innermost bead 19 is of a saw-tooth shape in cross-section. It has a first, inclined surface 23 adjacent the tapered end 18 and a second, abutment face 24 which lies substantially perpendicular to the longitudinal axis of the fitting. The other three beads 20-22 are of a generally rectangular shape in cross-section.

The hose 10 has an inner lining 25 which is provided at the end of the hose with a thickened skirt 26 and the lining terminates adjacent the sawtooth bead 19 apart from a thin tail layer 27. The lining layer 25 has a maximum outer diameter over the bead 19 and decreases in diameter progressively to a minimum (which is the normal outer diameter of the lining over the major part of the length of the hose) at a position at least 2.0 metres inward from the end 14 of the hose. The tail layer 27 extends over the peak of the bead 19, downwards adjacent the abutment face 24 and axially over the surface 17 to terminate between the bead 19 and adjacent bead 20.

A filler ring 28 of polymeric material having a fabric reinforcement embedded therein is provided over the tail layer 27 to fill the space between the beads 19 and 20.

The main reinforcement carcass 11 extends over the lining 25 and filler ring 28 to lie in contact with and conform to the shape of the beads 20-22. The carcass 11 is held against the end fitting by a plurality of binding wire assemblies (31-38) which each comprise one or more layers of helically extending binding wires. A first, major group 11a of layers of the multi-layer reinforcing carcass 11 is secured against the end fitting by an inner binding wire assembly 31 which extends from above the peak of bead 19 to above the peak of bead 20. This assembly holds the layers 11a against the filler ring 28. Three other inner binding wire assemblies 32,33,34 hold the layers 11a in a distorted configuration in the grooves between the beads 20,21 & 22 and to the right of bead 22. These assemblies and the assembly 31 are formed from a single high tensile steel wire wound at touch pitch to form the assemblies and at greater pitch to extend between the assemblies.

The remaining carcass layers 11b are applied over the wire assemblies 31-34 and are held against the end fitting by outer wire assemblies 35-38. Assembly 35 extends axially around the tapered end 18 of the end fitting, the first and second beads 19,20 and the space between those beads. The assemblies 36-38 lie around the inner binding wire assemblies 32-34 respectively, and the assemblies 35-58 are formed from a single length of high tensile steel wire in the same manner as the assemblies 31-34.

From the foregoing it will be understood that the reinforcing carcass is held firmly against the end fitting over the whole of that part of its length for which it is relatively undistorted, i.e. from the end 18, over the bead 19, filler ring 28 and second bead 20. In contrast all of the layers are secured at axially localised regions where the layers lie distorted to follow the contours provided by the beads 20-22.

The bound reinforcing carcass is surrounded by at least one helical crush resisting wire 40, another helical wire 41, a fabric interlayer 30 between the wires 40,41 and layers 42,43 of inner and outer component layers of the base cover.

The aforedescribed hose construction can provide good reliability but particularly if subject to conditions beyond its design specification there is a risk of premature bursting or of cracking of the lining layer in the vicinity of the end fitting.

Another known hose assembly in which binding wires secure an inner layer of a hose to an end fitting is described in US-A-3119415, corresponding to the preamble of claim 1.

The present invention seeks to provide an improved hose assembly and an improved end fitting for a hose whereby improved strength and fatigue resistance may be achieved without an undue increase of weight.

In accordance with the present invention, a hose assembly comprises in combination a reinforced hose an end of which surrounds at least part of an end fitting, said end fitting comprising a tail portion which lies inwards of the hose, the outer surface of the end fitting being provided with a first retention bead spaced axially from the tail end of the fitting and any additional retention bead lying further from the tail end of the fitting than said first retention bead, said hose comprising a main carcass reinforcement which extends axially over said first retention bead and two binding wire assemblies axially spaced from one another to lie axially either side of and spaced from the position of maximum circumference of the first retention bead, an axially inner binding wire assembly surrounding the tail portion of the fitting comprising at least one group of turns of wire, and is characterised in that an axially outer binding wire assembly lying the other side of the first retention bead comprises a plurality of superimposed layers of binding wire, and the axially outer binding wire assembly being of greater radial thickness than the axially inner binding wire assembly.

The advantage of the present invention over US-A-3 119 415 is found to result in improved fatigue life performance and reduction of the risk of premature failure of the hose assembly at the end fitting region.

The axially inner binding wire assembly may be positioned neighbouring a forward facing surface of the bead. Preferably it is of a single layer thickness of wire, and may comprise two or three or more axially spaced groups of wire in which in each group successive turns of wire lie at touch pitch. A minority of the groups may be positioned to act against a forward facing surface of the bead where that surface lies inclined to the longitudinal axis of the fitting.

One wire may extend from one group to another, but preferably the wire material of the inner assembly does not extend into association with the other, axially outer assembly. The presence of a binding wire which extends over the peak of the bead is thereby avoided.

Preferably the axially outer binding wire assembly is positioned neighbouring a rearward facing surface of the bead. It may act primarily to compress the reinforcement carcass radially against a cylindrical outer surface of the end fitting and secondarily against a part of that rearward facing bead surface which is adjacent that cylindrical surface.

The main reinforcement carcass may comprise a plurality of layers of reinforcement. Only some of said layers may be secured directly either side of the bead by the aforedescribed binding wire assemblies. In that case preferably it is only less than half, more preferably less than one third of the total number of layers that are secured in that manner. Where the ends of the reinforcement layers are split into two groups by the binding wire assemblies, which are hereafter referred to as first binding wire assemblies, the second, outer group of layers may terminate further from the tail end of the fitting than the first, inner layer(s).

The end fitting may be provided with a second bead which may be utilized as a retention bead to assist the aforementioned, first bead to locate part of a hose reinforcement carcass.

If the hose assembly incorporates an end fitting having two or more beads, those additional beads should be spaced further from the tail end of the end fitting than said first bead.

An outer group of reinforcement layers preferably is arranged to extend over a second retention bead to be secured to the fitting at either side of that bead by two second binding wire assemblies corresponding respectively with the two first binding wire assemblies which secure the inner layer(s) either side of the first bead. The outer group of reinforcement layers additionally may be secured at an axial position about the tail portion by a binding wire assembly which preferably comprises three or more axially spaced groups. The resulting three binding wire assemblies provided around the outer group of reinforcement layers preferably are separate from one another so as to avoid the presence of a binding wire over the peak of either of the retention beads.

The first inner layer, or group of layers preferably terminates between the first bead and the second bead.

The first retention bead may be of a low profile type having a rear portion which faces away from the tail end of the fitting and which as considered in longitudinal cross-section has an axial length, from a position of maximum radius of the head to a portion of minimum radius (i.e. where it meets the outer surface of the main body of the end fitting) which is at least 1.5 times the difference between said radii. Preferably said ratio of axial length to radial thickness of the rear portion of the bead is at least 2:1 and more preferably lies in the range 2:1 to 3:1.

The rear portion of a first bead of low profile form may be curved in cross-section and may be of a part circular shape thereby to provide a rearward facing surface of part spherical shape. Other curved profiles, or a rectilinear profile to define a frusto-conical surface, may be employed, the profile being selected to provide a substantially gradual reduction of diameter over the rear part of the bead particularly as compared with conventional beads which feature an abrupt reduction of diameter at the rear part of a bead.

The other, forward facing surface of the low profile retention bead which faces towards the tail end of the fitting preferably also has a profile for which the ratio of axial length to radial thickness is at least 1.5:1. The forward facing surface may have a profile which is a reverse of that of the rearward facing surface so that the overall bead profile as considered in longitudinal cross-section is symmetrical about a plane containing the outermost circumference of the bead.

Preferably said low profile retention bead is spaced from the tail end of the end fitting by a tail portion having an axial length at least equal to the axial length of the rear part of the bead, and preferably at least 1.5 times that length.

Preferably the second bead is spaced axially from the first, low profile bead by a distance at least equal to the axial length of the rear part of said low profile bead.

The second bead may have a greater radial thickness than the first bead. It may have a rearward facing surface (i.e. which faces away from the first bead) which lies at least in part inclined to the longitudinal axis of the fitting. The other surface of the bead, facing towards the first bead, may be relatively steep and may lie substantially in a plane perpendicular to said longitudinal axis.

Where the main carcass comprises two groups of layers, the two groups preferably are separated by a rubber interlayer which may be arranged to act as a secondary lining layer. Thus the interlayer may extend for the full length of the hose assembly and connect with the innermost lining about the axial ends of the inner layer(s) of reinforcement to provide leak protection in the event of any cracking or similar failure of the innermost lining.

If a second retention bead is provided for location of an outer group of reinforcement layers, lining layer material may be employed to ensure that the space between the two beads is fully occupied and thereby provide support for the outer group of layers so that they may extend free from distortion between the regions of the peaks of the two beads.

The lining layer of the hose, lying inwards of the or all layers of the carcass reinforcement, preferably is of a uniform thickness along the length of the hose to a distance within 1 metre and more preferably within 500mm of the tail end of the end fitting. From that position the outer diameter of the lining may increase progressively to a maximum where it extends over the peak of the low profile retention bead. Preferably it increases at a uniform rate from its minimum outer diameter to a position around the tail portion of the end fitting.

Part of the tail portion of the end fitting, being a part nearest the tail end preferably has a tapered external surface, the taper preferably lying in the angle range 2 to 5 degrees.

Embodiments of the present invention will now be described by way of example and with reference to the accompanying diagrammatic drawings wherein:-
Figure 2 is a longitudinal sectional view of part of a hose and end fitting assembly in accordance with the present invention;
Figure 3 is a view similar to that of Figure 2 of a hose assembly having a modified end fitting;
Figure 4 is a side view, part in longitudinal section, of the end fitting of Figure 3, and
Figure 5 is a view similar to that of Figure 2 of another hose assembly of modified construction.

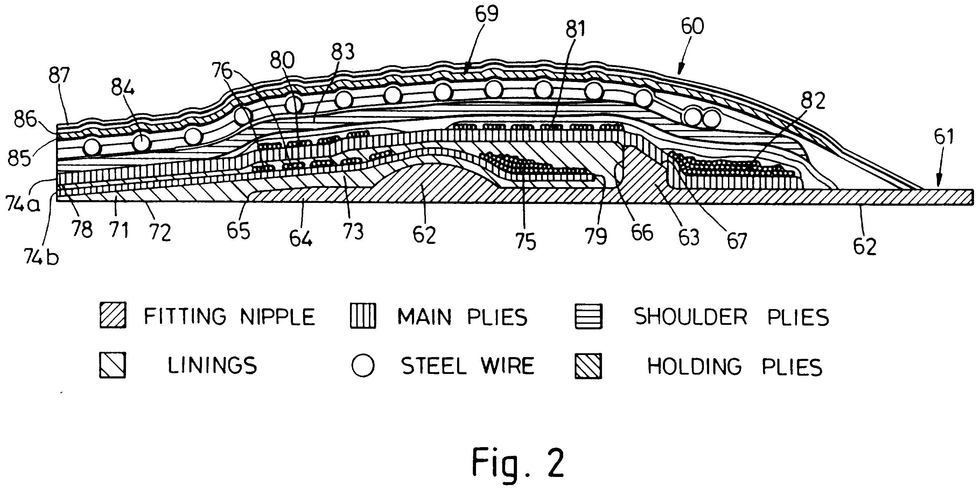

In the construction of Figure 2 a hose assembly 60 comprises a tubular end fitting 61 having a smooth cylindrical 24" diameter bore and two external beads 62,63.

The outer surface of the fitting 61 at each side of the beads is cylindrical except for a part of the axial length of the inner end portion 64 which is slightly tapered at an angle range of between 2 and 5 degrees to the longitudinal axis over the first half of the distance from the inner end 65 to a first 62 of the retention beads.

The first bead 62 is of a part-circular symmetrical profile as viewed in section in Figure 2 and is of a low profile. The extent of the profile in the longitudinal direction of the fitting in this example is 2.5 times the extent to which the profile extends outwards of the neighbouring cylindrical surfaces of the fitting. The tail portion 64 has an axial length which equals that of the first bead, i.e. twice the axial extent of the rearward facing part of the bead.

The second retention bead 63 is substantially of a saw-toooth profile, but of a reverse orientation compared with that of a conventional hose end fitting. The bead 63 has an abutment face 66 which lies in a plane perpendicular to the longitudinal axis, facing the bead 62, and a frustoconical face 67 which faces outwards and away from the first bead 62, at an angle of 45 degrees.

The bead 63 extends radially outwards from the cylindrical outer surfaces of the fitting by approximately 60% further than the bead 62.

The hose and end fitting assembly is constructed by building the hose end portion 69 around the end fitting 61.

A hose lining layer 71 has an inner surface 72 which defines a bore corresponding to that of the end fitting and an outer surface which increases progressively from a minimum diameter at a position approximately 280 mm inwards from the hose fitting inner end 65 to a maximum over the first retention bead. The lining layer 71 terminates substantially adjacent the second bead 63.

The main multi-layer reinforcing carcass 74 of the hose is divided into two groups of layers, an inner group 74a and an outer group 74b. The inner group comprises a minority of the number of reinforcing layers, in this case a third of the total.

The inner group 74a conforms to the contours of the lining layer 71 and also terminates substantially adjacent the second retention bead 63. It is held in position around the end fitting by two independent inner groups 73,75 of binding wires provided one each side of the first bead 62. Each binding wire is a high tensile steel wire.

A first group 73 surrounds the tapered end zone of the fitting and comprises five zones 76 slightly spaced apart axially to allow surrounding hose wall material to bond to the layers 74a. Each zone is formed from a single thickness of wire, and the five zones may be formed from a single continuous wire.

The second group 75 comprises four superimposed zones each of a single thickness of wire, and the zones may be formed from a single continuous wire.

The zones of group 75 are superimposed in an asymmetric manner biassed towards the bead 62 so as to hold the reinforcement layers 74a uniformly against the bead and in particular the region where the bead meets the cylindrical surface of the fitting, as well as to hold it against that cylindrical surface.

The inner group 74a is covered by a layer 78 of polymeric material, typically integral with that of the lining layer by extending around the axial end of the group 74a. That layer is thickened in the region between the beads 62,63 so as to occupy fully the available space therebetween, and it acts as an inter-layer to separate the inner group 74a from the surrounding outer group 74b of carcass reinforcing layers.

The outer group 74b extends further than the inner group 74a and surrounds the frusto-conical face 67 of the second bead and part of the neighbouring outer cylindrical surface of the end fitting.

The outer group 74b is held in position by three groups 80-82 of binding wires. A first group 80 surrounds the tapered end zone, a second group 81 lies axially between the peaks of the first and second beads 62,63 and the third group 82 lies alongside the frusto-conical face of the second bead 63.

The groups 80 and 81 are each constructed in a manner similar to the aforedescribed inner group 73 and the group 82 corresponds substantially with the aforedescribed group 75.

The hose construction is then completed by the application of shoulder plies 83 of elastomeric material to end regions of the hose (to extend over approximately the length of the lining layer which is tapered), a helical crush resisting wire 84 and layers 85,86,87 of inner and outer component layers of the hose cover.

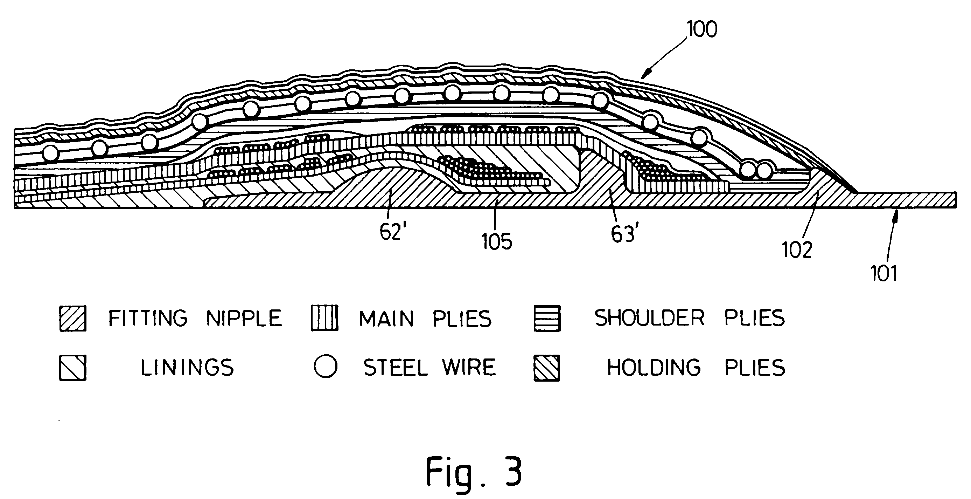

In a second embodiment of the invention, shown in Figure 3, a hose assembly 100 comprises an end fitting 101 of a kind similar to the fitting 61 of Figure 1 apart from the provision of a third bead 102 at an outward end of the fitting. The rib 102 is of a generally similar profile to that of the aforedescribed second bead 63, but is of a reduced radial extent. It serves as a building aid to assist smooth termination of the hose cover layers and does not function to provide axial location of the fitting relative to the main carcass reinforcement layers.

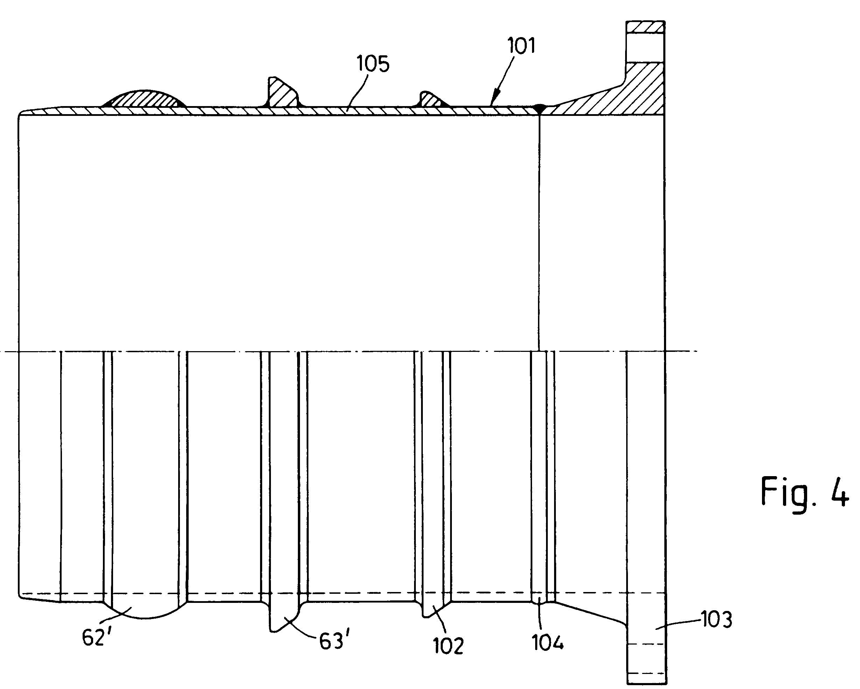

The end fitting 101 of Figure 3 is shown in more detail in Figure 4. This shows that the three beads 62',63' and 102 may be preformed as individual rings which are then welded to the cylindrical tubular body portion 105 of the fitting, and that an end flange 103 may be welded at 104 to that body portion.

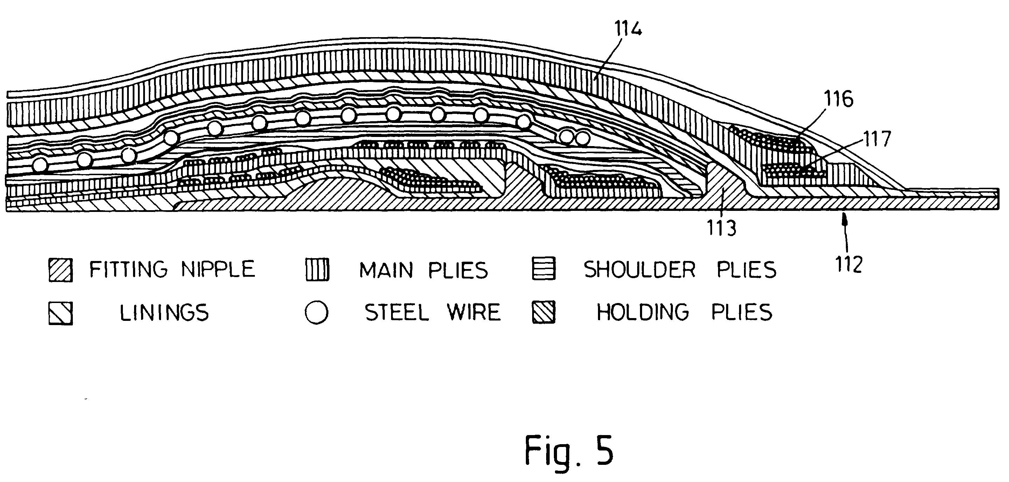

In a further embodiment shown in Figure 5 a hose assembly 110 comprises a twin carcass type hose 111 which incorporates an end fitting 112 which is generally similar to that of Figure 3 except that the bead 102 is replaced by a bead 113 of a cross-section which corresponds substantially with that of the bead 63' of Figure 3.

The bead 113 and serves to assist with retention of the secondary carcass layers 114. The secondary carcass is held against a frusto-conical surface 115 of the bead 113 by a surrounding asymmetric arrangement of superimposed layers of cords 116 corresponding substantially with the aforedescribed groups 75,82 and by embedded layers of cords 117 provided sandwiched between two of the secondary carcass layers.

By providing a low profile retention bead it is found that there is a useful improvement in the durability of the hose as compared with a hose of conventional construction.

## Claims

1. A hose assembly comprising in combination a reinforced hose an end (69) of which surrounds at least part of an end fitting (61), said end fitting comprising a tail portion (64) which lies inwards of the hose, the outer surface of the end fitting being provided with a first retention bead (62) spaced axially from the tail end of the fitting and any additional retention bead (63) lying further from the tail end of the fitting (61) than said first retention bead (62), said hose comprising a main carcass reinforcement (74) which extends axially over said first retention bead (62) and two binding wire assemblies (73,75) axially spaced from one another to lie axially either side of and spaced from the position of maximum circumference of the first retention bead (62), an axially inner binding wire assembly (73) surrounding the tail portion of the fitting comprising at least one group (76) of turns of wire, characterised in that an axially outer binding wire assembly (75) lying the other side of the first retention bead comprises a plurality of superimposed layers of binding wire, and the axially outer binding wire assembly (75) being of greater radial thickness than the axially inner binding wire assembly (73).

2. An assembly in accordance with claim 1, characterised in that the axially inner binding wire assembly (73) is positioned neighbouring a forward facing surface (23) of the first retention bead.

3. An assembly in accordance with claim 1 or claim 2, characterised in that the axially inner binding wire assembly (73) is of a single layer thickness of wire.

4. An assembly in accordance with claim 3, characterised in that the axially inner binding wire assembly (73) comprises two or three or more axially spaced groups (76) of wire in which in each group successive turns of wire lie at touch pitch.

5. An assembly in accordance with claim 4, characterised in that the first retention bead (62) has a forward facing surface which lies inclined to the longitudinal axis of the fitting and a minority of the groups (76) are positioned to act against said forward facing surface of the bead.

6. An assembly in accordance to claim 4 or claim 5, characterised in that one wire extends from one group to another.

7. An assembly in accordance with any one of the preceding claims, characterised in that the wire material of the inner assembly (73) does not extend into association with the other, axially outer assembly.

8. An assembly in accordance with any one of the preceding claims, characterised in that the axially outer binding wire assembly (75) is positioned neighbouring a rearward facing surface of the first retention bead.

9. An assembly in accordance with claim 8, characterised in that the axially outer binding wire assembly (75) acts primarily to compress the reinforcement carcass radially against a cylindrical outer surface of the end fitting and secondarily against a part of that rearward facing bead surface which is adjacent that cylindrical surface.

10. An assembly in accordance with any one of the preceding claims, characterised in that the main reinforcement carcass comprises a plurality of layers(74a,74b) of reinforcement and only some of said layers are secured directly either side of the bead by the said binding wire assemblies.

11. An assembly in accordance with any one of the preceding claims, characterised in that the ends of the reinforcement layers are split into two groups by the binding wire assemblies denoted first binding wire assemblies, and the second, outer group of layers (74a) terminate further from the tail end of the fitting than the first, inner layer(s) (74b).

12. An assembly in accordance with any one of the preceding claims, characterised in that the end fitting is provided with a second bead (63) utilized as a retention bead to assist the said first bead (62) to locate part of a hose reinforcement carcass.

13. An assembly in accordance with claims 11 or 12, characterised in that an outer group of reinforcement layers (74a) is arranged to extend over a or the second retention bead (63) to be secured to the fitting at either side of that bead by two second binding wire assemblies (81,82) corresponding respectively with the two first binding wire assemblies (73,75) which secure the inner layer(s) either side of the first bead.

14. An assembly in accordance with any one of the preceding claims, characterised in that the first retention bead (62) is of a low profile type having a rear portion which faces away from the tail end (64) of the fitting and which as considered in longitudinal cross-section has an axial length, from a position of maximum radius of the bead to a position of minimum radius which is at least 1.5 times the difference between said radii.

## Patentansprüche

1. Schlauchaufbau, in Kombination umfassend einen verstärkten Schlauch, von dem ein Ende (69) wenigstens einen Teil eines Endanschlusses (61) umgibt, wobei der Endanschluß ein Endstück (64) aufweist, das einwärts vom Schlauch liegt, wobei die Außenfläche des Endanschlusses mit einer ersten Rückhaltewulst (62) axial beabstandet vom Endstück des Anschlusses versehen ist, und jegliche zusätzlich Rückhaltewulst (63) weiter vom Endstück des Anschlusses entfernt liegt als die erste Rückhaltewulst (62), wobei der Schlauch eine Hauptkarkassenverstärkung (74) aufweist, die sich axial über die erste Rückhaltewulst (62) erstreckt, und zwei Verbindungsdrahtaufbauten (73, 75) axial beabstandet voneinander derart, daß sie axial auf jeder Seite und beabstandet von der Position des maximalen Umfangs der ersten Rückhaltewulst (62) zu liegen kommen, wobei ein axial innerer Verbindungsdrahtaufbau (73), der das Endstück des Anschlusses umgibt, wenigstens eine Gruppe (76) aus Drahtwicklungen aufweist, dadurch gekennzeichnet, daß ein axial äußerer Verbindungsdrahtaufbau (75), der auf der anderen Seite der ersten Rückhaltewulst liegt, eine Mehrzahl von übereinander angeordneten Schichten aus Verbindungsdraht aufweist, und der axial äußere Verbindungsdrahtaufbau (75) eine größere radiale Dicke als der axial innere Verbindungsdrahtaufbau (73) hat.

2. Aufbau nach Anspruch 1, dadurch gekennzeichnet, daß der axial innere Verbindungsdrahtaufbau (73) benachbart zu einer vorwärts weisenden Fläche (73) der ersten Rückhaltewulst positioniert ist.

3. Aufbau nach Anspruch 1 oder 2, dadurch gekennzeichnet, daß der axial innere Verbindungsdrahtaufbau (73) aus einer einzigen Drahtdickenschicht besteht.

4. Aufbau nach Anspruch 3, dadurch gekennzeichnet, daß der axial innere Verbindungsdrahtaufbau (73) zwei oder drei oder mehr axial beabstandete Gruppen (76) aus Draht aufweist, wobei in jeder Gruppe aufeinanderfolgende Drahtwicklungen auf Berührungsabstand liegen.

5. Aufbau nach Anspruch 4, dadurch gekennzeichnet, daß die erste Rückhaltewulst (62) eine vorwärts weisende Fläche aufweist, die geneigt zur Längsachse des Anschlusses liegt, und eine Minderheit der Gruppen (76) so positioniert ist, daß sie gegen die vorwärts weisende Fläche der Wulst wirkt.

6. Aufbau nach Anspruch 4 oder 5, dadurch gekennzeichnet, daß ein Draht sich von einer Gruppe zur nächsten erstreckt.

7. Aufbau nach einem der vorangehenden Ansprüche, dadurch gekennzeichnet, daß das Drahtmaterial des inneren Aufbaus (73) sich nicht in Verbindung mit dem anderen axial äußeren Aufbau erstreckt.

8. Aufbau nach einem der vorangehenden Ansprüche, dadurch gekennzeichnet, daß der axial äußere Verbindungsdrahtaufbau (75) benachbart zur rückwärts weisenden Fläche der ersten Rückhaltewulst positioniert ist.

9. Aufbau nach Anspruch 8, dadurch gekennzeichnet, daß der axial äußere Verbindungsdrahtaufbau (75) primär zum Drücken der Verstärkungskarkasse radial gegen eine zylindrische Außenfläche des Endanschlusses und sekundär gegen einen Teil der rückwärts weisenden Wulstfläche wirkt, die benachbart zu dieser zylindrischen Fläche liegt.

10. Aufbau nach einem der vorangehenden Ansprüche, dadurch gekennzeichnet, daß die Hauptverstärkungskarkasse eine Mehrzahl von Verstärkungsschichten (74a, 74b) aufweist, und lediglich einige der Schichten direkt auf jeder Seite der Wulst durch die Verbindungsdrahtaufbauten fixiert bzw. festgelegt sind.

11. Aufbau nach einem der vorangehenden Ansprüche, dadurch gekennzeichnet, daß die Enden der Verstärkungsschichten durch Verbindungsdrahtaufbauten in zwei Gruppen unterteilt sind, die als erste Verbindungsdrahtaufbauten bezeichnet sind, und die zweite äußere Schichtengruppe (74a) weiter entfernt vom Endstück des Anschlusses als die erste innere Schicht(en) (74b) endet.

12. Aufbau nach einem der vorangehenden Ansprüche, dadurch gekennzeichnet, daß der Endanschluß mit einer zweiten Wulst (63) versehen ist, die als Rückhaltewulst verwendet wird, um die erste Wulst (62) darin zu unterstützen, einen Teil einer Schlauchverstärkungskarkasse zu lokalisieren.

13. Aufbau nach Anspruch 11 oder 12, dadurch gekennzeichnet, daß eine äußere Verstärkungsschichtgruppe (74a) angeordnet ist, sich über eine oder die zweite Rückhaltewulst (63) zu erstrecken, um an dem Anschluß auf jeder Seite dieser Wulst durch zwei zweite Verbindungsdrahtaufbauten (81, 82) entsprechend jeweils den zwei ersten Verbindungsdrahtaufbauten (73, 75) befestigt zu sein, welche die innere Schicht(en) auf jeder Seite der ersten Wulst fixieren.

14. Aufbau nach einem der vorangehenden Ansprüche, dadurch gekennzeichnet, daß die erste Rückhaltewulst (62) von einem Niedrigprofiltyp mit einem hinteren Abschnitt ist, der vom Endstück (64) des Anschlusses wegweist, und der im Längsschnitt gesehen eine axiale Länge ausgehend von einer Position eines maximalen Radius der Wulst zu einer Position eines minimalen Radius von wenigstens dem 1,5-fachen der Differenz zwischen den Radien aufweist.

## Revendications

1. Ensemble de tuyau comprenant en combinaison un tuyau renforcé, dont une extrémité (69) entoure au moins une partie d'un raccord d'extrémité (61), ledit raccord d'extrémité comprenant une partie de queue (64) qui s'étend vers l'intérieur du tuyau, la surface extérieure du raccord d'extrémité étant pourvue d'un premier bourrelet de retenue (62) espacé axialement de l'extrémité de queue du raccord et de tout bourrelet de retenue supplémentaire (63) s'étendant plus loin de l'extrémité de queue du raccord (61) que ledit premier bourrelet de retenue (62), ledit tuyau comprenant un renforcement principal de carcasse (74) qui s'étend axialement par-dessus ledit premier bourrelet de retenue (62) et deux ensembles de fils métalliques de ceinture (73, 75) espacés axialement l'un de l'autre afin de s'étendre axialement de chaque côté et à distance de l'emplacement de circonférence maximum du premier bourrelet de retenue (62), un ensemble axialement intérieur de fils métalliques de ceinture (73), entourant la partie de queue du raccord, comprenant au moins un groupe (76) de spires de fil métallique, caractérisé en ce qu'un ensemble axialement extérieur de fils métalliques de ceinture (75), s'étendant de l'autre côté du premier bourrelet de retenue, comprend une pluralité de couches superposées de fils métalliques de ceinture, et en ce que l'ensemble axialement extérieur de fils métalliques de ceinture (75) présente une épaisseur radiale plus forte que l'ensemble axialement intérieur de fils métalliques de ceinture (73).

2. Ensemble selon la revendication 1, caractérisé en ce que l'ensemble axialement intérieur de fils métalliques de ceinture (73) est positionné à proximité d'une surface faisant face vers l'avant (23) du premier bourrelet de retenue.

3. Ensemble selon la revendication 1 ou la revendication 2, caractérisé en ce que l'ensemble axialement intérieur de fils métalliques de ceinture (73) est d'une épaisseur d'une seule couche de fils métalliques.

4. Ensemble selon la revendication 3, caractérisé en ce que l'ensemble axialement intérieur de fils métalliques de ceinture (73) comprend deux ou trois ou plusieurs groupes espacés axialement (76) de fils métalliques dans lesquels, dans chaque groupe, des spires successives de fil métallique s'étendent bord à bord.

5. Ensemble selon la revendication 4, caractérisé en ce que le premier bourrelet de retenue (62) comporte une surface faisant face vers l'avant qui est inclinée par rapport à l'axe longitudinal du raccord, et en ce qu'une partie mineure des groupes (76) est positionnée de façon à agir sur ladite surface faisant face vers l'avant du bourrelet.

6. Ensemble selon la revendication 4 ou la revendication 5, caractérisé en ce qu'un fil métallique s'étend d'un premier groupe à un autre.

7. Ensemble selon l'une quelconque des revendications précédentes, caractérisé en ce que le matériau en fil métallique de l'ensemble intérieur (73) ne s'étend pas jusque dans l'autre ensemble, axialement extérieur.

8. Ensemble selon l'une quelconque des revendications précédentes, caractérisé en ce que l'ensemble axialement extérieur de fils métalliques de ceinture (75) est positionné à proximité d'une surface faisant face vers l'arrière du premier bourrelet de retenue.

9. Ensemble selon la revendication 8, caractérisé en ce que l'ensemble axialement extérieur de fils métalliques de ceinture (75) sert principalement à comprimer radialement la carcasse de renforcement contre une surface extérieure cylindrique du raccord d'extrémité, et accessoirement à la comprimer contre une partie de la surface faisant face vers l'arrière du bourrelet qui est contiguë à cette surface cylindrique.

10. Ensemble selon l'une quelconque des revendications précédentes, caractérisé en ce que la carcasse principale de renforcement comprend une pluralité de couches (74a, 74b), de renforcement et en ce que certaines seulement desdites couches sont fixées directement de chaque côté du bourrelet par lesdits ensembles de fils métalliques de ceinture.

11. Ensemble selon l'une quelconque des revendications précédentes, caractérisé en ce que les extrémités des couches de renforcement sont divisées en deux groupes par les ensembles de fils métalliques de ceinture que l'on appelle premiers ensembles de fils métalliques de ceinture, et en ce que le second groupe, extérieur,de couches (74a) se termine plus loin de l'extrémité de queue du raccord que la ou les premières couches intérieures (74b).

12. Ensemble selon l'une quelconque des revendications précédentes, caractérisé en ce que le raccord d'extrémité est pourvu d'un second bourrelet (63) servant de bourrelet de retenue pour aider ledit premier bourrelet (62) à positionner une partie de la carcasse de renforcement du tuyau.

13. Ensemble selon la revendication 11 ou la revendication 12, caractérisé en ce qu'un groupe extérieur de couches de renforcement (74a) est disposé de façon à s'étendre par-dessus un ou le second bourrelet de retenue (63) afin d'être fixé au raccord de chaque côté de ce bourrelet par deux seconds ensembles de fils métalliques de ceinture (81, 82),correspondant respectivement aux deux premiers ensembles de fils métalliques de ceinture (73, 75) qui fixent la ou les couches intérieures de chaque côté du premier bourrelet.

14. Ensemble selon l'une quelconque des revendications précédentes, caractérisé en ce que le premier bourrelet de retenue (62) est d'un type à profil bas comportant une partie arrière qui fait face à l'opposé de l'extrémité de queue (64) du raccord et qui, observée en coupe longitudinale, présente une longueur axiale, depuis un emplacement de rayon maximum du bourrelet jusqu'à un emplacement de rayon minimum, qui représente au moins 1,5 fois la différence entre lesdits rayons.
